(19) Europäisches Patentamt
European Patent Office
Office européen des brevets

(11) Publication number: 0 059 482 A1

# (12) EUROPEAN PATENT APPLICATION

(21) Application number: 82101647.4

(22) Date of filing: 03.03.82

(51) Int. Cl.$^3$: C 08 F 283/08

(30) Priority: 04.03.81 JP 31721/81

(43) Date of publication of application: 08.09.82 Bulletin 82/36

(84) Designated Contracting States: BE DE FR GB IT NL SE

(71) Applicant: KANEGAFUCHI KAGAKU KOGYO KABUSHIKI KAISHA
2-4 Nakanoshima 3-chome
Kita-ku Osaka(JP)

(72) Inventor: Miyashita, Shunitsu
608, 1-3, 1-chome Yoshida-cho
Hyogo-ku Kobe-shi Hyogo-ken(JP)

(72) Inventor: Somemiya, Akiyoshi
440-19, Higashiyama Ohkuradani
Akashi-shi Hyogo-ken(JP)

(74) Representative: Vossius Vossius Tauchner Heunemann Rauh
Siebertstrasse 4 P.O. Box 86 07 67
D-8000 München 86(DE)

## (54) Graft polymers of polyphenylene oxide with acrylonitrile and styrene.

(57) The present invention is directed to acrylonitrile compound - styrene compound grafted polyphenylene oxides having substantially no unmodified polyphenylene ether. They have excellent solvent resistance and resistance to oxidation.



Croydon Printing Company Ltd.

0059482

Our Ref.: R 712 EP, Case: R-85/MPO-3

KANEGAFUCHI KAGAKU KOKYO KABUSHIKI KAISHA, Osaka/Japan

"Graft Polymers of Polyphenylene Oxide with Acrylonitrile and Styrene"

## BACKGROUND OF THE INVENTION

### (1) Field of the Invention

This invention relates to acrylonitrile compound - styrene compound grafted polyphenylene oxides which have excellent solvent resistance and resistance to oxidation.

### (2) Description of the Prior Art

Polyphenylene oxide (hereinafter referred to as PPO) is a resin having excellent heat resistance, mechanical properties and electrical properties. However, its solvent resistance (especially resistance to hydrocarbons) and resistance to oxidation are not adequate in some applications.

The resistance to oxidation is generally improved by incorporating polystyrene and an antioxidizing agent. For the solvent resistance, an effective method to improve it has not yet been proposed. This is because acrylonitrile - styrene (hereinafter referred to as AS) resins having excellent solvent resistance are not compatible with PPO and therefore the incorporation of an AS resin for the purpose of improving the solvent resistance of PPO would reduce the excellent mechanical properties inherent to PPO.

In order to overcome this disadvantage, attempts to graft-polymerize an acrylonitrile compound - styrene compound copolymer on PPO has been proposed; see, for example, Japanese Patent Publication No. 38596/1977 and Japanese Patent Application Laid-open No. 137130/1980. However, the AS

grafted PPOs described in these publications have only a low extent of modification.

In general, the extent of graft modification of PPO is evaluated by the time to form a precipitate when dissolving the graft modified PPO in methylene chloride. This method is called a methylene chloride test. It utilizes the phenomenon that PPO in methylene chloride solution forms a complex with said solvent and is rendered insoluble in said solvent to form a precipitate; therefore no precipitate formation in this test is construed as meaning that the properties as PPO have been lost. The time to form a precipitate dependends on the molecular weight of PPO, and particularly when the number of the repeating units (n) of PPO is below 100, the time to precipitate is long.

In the published or laid-open patent applications hereinabove cited, the methylene chloride test was conducted in 3 - 24 hours. However, as the result of our detailed study, it has now been discovered that with the extent of modification such as that evaluated in such time period, the abovementioned resistance to oxidation and solvent resistance are practically inadequate. In other words, the known AS grafted PPO has a low degree of graft modification, and its properties are similar to those of PPO, and especially the resistance to oxidation cannot withstand practical use.

As the result of our study, it has now been found that in order to satisfy these resistances to oxidation and solvents, an AS grafted PPO is required for which in the methylene chloride test at least 48 hours are necessary before a precipitate is formed,

Preferably at least 72 hours are required without precipitate formation in the methylene chloride test.

## SUMMARY OF THE INVENTION

The graft copolymer of the present invention contains substantially no unmodified polyphenylene oxide. This can be acknowledged by effecting a methylene chloride test on the copolymer.

Accordingly, this invention provides an acrylonitrile compound - styrene compound grafted polyphenylene oxide which does not form a precipitate after 48 hours, when a solution of 5 w/v% thereof in methylene chloride is allowed to stand at 23°C.

## DETAILED DESCRIPTION OF THE INVENTION

In this invention, the copolymer which does not generate any turbidity even after 72 hours in methylene chloride solution is especially preferred, although that which generates a little turbidity after 72 hours exhibits a satisfactory improving effect on the resistance to oxidation and solvent resistance and can be used for practical purposes. For practical applications the formed precipitate should not exceed 5 % by weight and preferably be 1 % by weight or below, based on the original polymer weight after 48 hours of the test.

The polypropylene oxide as herein referred to is that having repeating units of the formula:

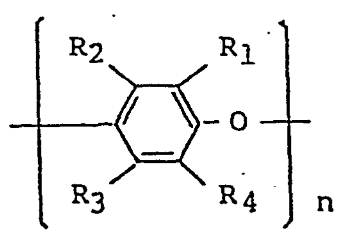

wherein $R_1$, $R_2$, $R_3$ and $R_4$ are the same or different and are chosen from a hydrogen atom, a hydrocarbon group, a substituted hydrocarbon group, a halogen atom, a hydrocarbyloxy group, an amino group or a substituted amino group. Specific examples include poly(2,6-dimethylphenylene-1,4-ether), poly(2,6-diethylphenylene-1,4-ether), poly(2,6-dipropylphenylene-1,4-ether), poly(2-methyl-6-allylphenylene-1,4-ether), poly(2,6-dimethoxyphenylene-1,4-ether), poly(2-methyl-6-chlorophenylene-1,4-ether), poly(2,6-dichloromethylphenylene-1,4-ether), poly(2-methyl-6-bromophenylene-1,4-ether), poly(2,5-dimethylphenylene-1,4-ether), poly(2,6-diphenylphenylene-1,4-ether) etc., as well as copolymers thereof. Further, the copolymers of aniline compounds disclosed in Japanese Patent Application No. 42171/1980 are also included in this invention.

The number of the repeating units (n) is suitably not less than 50 but not higher than 350. Preferably, it is in the range of 100 - 250. Especially preferred is the range of 100 - 200.

The method of graft-copolymerizing an acrylonitrile compound and a styrene compound to PPO may be any, for example emulsion polymerization, bulk polymerization and the like. Particularly, by using the gas-phase graft polymerization method disclosed in Japanese Patent laid open No. 34716/1981, a preferred acrylonitrile compound - styrene compound grafted PPO may be obtained. This is presumably because the acrylonitrile compound - styrene compound grafted PPO obtained by this gas-phase graft-polymerization has a plurality of acrylonitrile compound - styrene compound copolymer graft side-chains per chain of the backbone PPO and hence its modification efficiency is higher than that of the

acrylonitrile compound - styrene compound grafted PPO obtained by other emulsion graft-polymerization, bulk graft-polymerization, solution graft-polymerization or the like.

When the degree of grafting is enhanced, the excellent properties inherent to PPO are reduced, whereas when the degree of grafting is lowered, the effect to improve the solvent resistance and resistance to oxidation is small. Therefore, the lower and upper limits of the degree of grafting are dominated by the balance of the properties of PPO and the properties of the acrylonitrile compound - styrene compound copolymer. The degree of grafting is generally 10 - 200%, and preferably 15 - 100%. The degree of grafting as herein referred to is determined by the equation (1):

$$\text{Degree of Grafting (\%)} = \frac{A\ (g)}{\text{Weight of PPO (g)}} \times 100$$

wherein A is the weight of the acrylonitrile compound - styrene compound copolymer which forms the graft side-chains.

The acrylonitrile compound which is one component of the graft side-chains means acrylonitrile, methacrylonitrile and the like.

The other component, styrene, means styrene or an alkyl- or halogen-substituted derivative thereof. Specific examples thereof include styrene, monochlorostyrene, dichlorostyrene, α-methylstyrene, p-methylstyrene, p-phenylstyrene, 2,4-dimethylstyrene and the like.

0059482

Such acrylonitriles and styrenes may be used by 5 to 185 parts by weight per 100 parts by weight of the polyphenylene ether in each.

The acrylonitrile content of the acrylonitrile compound - styrene compound copolymer graft side-chains is 5 - 45% by weight. If the content of the acrylonitrile compound is too small, the effect to improve the solvent resistance is small. On the other hand, if the content of the acrylonitrile compound is too large, deterioration of the acrylonitrile compound - styrene compound copolymer graft side-chains is promoted, discoloration is intensified and the mechanical properties are lowered.

While this invention utilizes both of the above-described components as the essential components for the graft side-chains, it is possible to additionally employ other copolymerisable monomers, for example, vinyl monomers, such as acrylic acid, methacrylic acid, alkyl acrylate, alkyl methacrylate (usually containing 1 to 10 carbon atoms in the alkyl group), and maleic acid anhydride, etc., according to the purpose. Such monomers are employed in the range which does not impair the characteristics of the copolymers of this invention, generally in amounts of up to 80 parts by weight based on 100 parts by weight of the polyphenylene ether.

This invention is more particularly described by the following examples.

Example 1

Twenty grams of poly(2,6-dimethyl phenylene-1,4-ether) ([η]=0.49, chloroform, 25°C) and 60 ml of aceton solution containing 1.00g of dicumylperoxide were mixed. The resulting mixture was air-dried and subsequently dried at 60°C for 1 hour under reduced pressure to prepare a powdered polyphenyleneoxide-containing radical polymerisation initiator. A reaction vessel is charged with the obtained powder. After deaerating, acrylonitrile - styrene vapor generated from a 1:9 (by weight) mixture of acrylonitrile and styrene monomers was introduced while heating to 120°C, and copolymerization was effected for 3 hours. After the reaction the polymer was washed well with methanol and then with methyl ethyl ketone to remove impurities, such as the residual radical polymerization initiator etc., and the free acrylonitrile - styrene copolymer. The washed and dried acrylonitrile - styrene grafted PPO was examined by the organic elemental microanalysis, to find that the degree of grafting was 43% and the acrylonitrile content in the acrylonitrile - styrene copolymer graft side-chains was 36% by weight.

Two grams of this acrylonitrile - styrene grafted PPO were dissolved in 40 ml of methylene chloride, placed in a stoppered Erlenmeyer flask, and allowed to stand in a constant temperature chamber adjusted to 23°C. There was no precipitate noted by observation for 7 days. This solution remained transparent, quite the same as when it was prepared.

The acrylonirtile - styrene grafted PPO was molded into a sheet of 0.5 mm in thickness by a hot press, and tested for the resistance to oxidation and solvent resistance.

·Test on Resistance to Oxidation

The sheet was exposed to hot air in a hot air-circulating dryer adjusted to 200°C for 5 hours. As control, a PPO sheet was also placed therein. When these sheets were dissolved in chloroform the PPO sheet generated 22% of gel due to thermal-oxidative deterioration, whereas the acrylonitrile - styrene grafted PPO sheet showed almost no gel.

·Test on Solvent Resistance

The sheet was dipped in normal heptane, and the change in appearance was examined. After dipping for 5 hours, there was no change observed in appearance of the acrylonitrile - styrene grafted PPO sheet.

Comparative Example 1

Fifty grams of PPO ([$\eta$] = 0.49, chloroform, 25°C), 50 g of ethylbenzene, 70 g of styrene, 30 g of acrylonitrile and 1.5 g of di-tertiary-butyl peroxide were charged into a 500 cc autoclave, and stirred at 60°C to achieve uniform dissolution. Then the air in the autoclave was replaced by nitrogen gas. The temperature of the reaction vessel was controlled to 140°C and graft polymerization was effected for 2.5 hours. After completion of the reaction, the contents were withdrawn, and dissolved in 3500 ml of toluene by heating. Thereafter,

methanol in an amount 10 times that of toluene was added thereto to obtain a resin powder. This powder was washed with methanol and then with methyl ethyl ketone as described in Example 1. to obtain a purified acrylonitrile - styrene grafted PPO. As the result of the organic elemental microanalysis, the degree of grafting was found to be 71% and the acrylonitrile content in this acrylonitrile - styrene copolymer graft side-chains was found to be 27%. Two grams of this acrylonitrile - styrene grafted PPO were dissolved in 40 ml of methylene chloride, placed in a stoppered Erlenmeyer flask, and allowed to stand in a constant temperature chamber at 23°C. Observation after 48 hours revealed that this solution was opaque. It was filtered to obtain a precipitate, which was dried and weighed to yield 1.26 g. In other words, 63% of the resin were recovered as the precipitate.

This acrylonitrile - styrene grafted PPO was tested for the resistance to oxidation and solvent resistance similarly as in Example 1. As the result, the gel formed by thermal-oxidative deterioration was 9%. As for the solvent resistance, the appearance after dipped in normal heptane lost gloss, obviously indicating that it has been corroded with normal heptane.

Example 2

Twenty gramsof poly(2,6-dimethyl phenylene-1,4-ehter) ([η]=0.49, chloroform 25°C) powder are mixed with 100 ml of methylene chloride solution containing 1.00g of dicumyl peroxide. The resulting mixture was treated and dried for preparing a copolymer and for the test in the same manner as in Example 1. It was found that the degree of grafting was 38% and the content of the acrylonitrile in the graft side-chains was 38% by weight. The methylene chloride test and the tests on the solvent resistance and resistance to oxidation gave quite the same results as those in Example 1.

Example 3

By replacing the dicumyl peroxide in Example 1 by di-tertiary-butyl peroxide and changing the reaction temperature of 120°C into 130°C, the grafting reaction was effected. The obtained polymer was treated and analyzed similarly as in Example 1. The degree of grafting was 65% and the acrylonitile content in the graft side-chains was 33% by weight.

This acrylonitrile - styrene grafted PPO was subjected to the methylene chloride test similarly as in Example 1. As the result, the methylene chloride solution did not generate any turbidity and remained transparent, quite the same as when it was prepared, even after one month.

The resistance to oxidation and solvent resistance were found comparable to those in Example 1.

Comparative Example 2

A one liter autoclave was charged with 150g of 2,6-dimethylphenylene-1,4-ether, 100g of ethylbenzene, 140g of styrene, 60g of acrylonitrile and 3g of di-tert-butylperoxide to form a solution by stirring, and then with nitrogen gas to replace the air in its interior. The solution was reacted for 150 min at 137°C. The resulting product was taken out of the autoclave, dissolved into 600ml of toluene and then added with methanol to precipitate the polymer products. The precipitates were well washed with methanol and then with methyl ethyl ketone as described in Example 1. The thus obtained polymer was dried at 215°C under reduced pressure and then used as sample for the following tests. 2.0g of the sample was dissolved into 40ml of methylene chloride and then left to stand at 23°C in a sealed receptacle. After 48 hours the precipitate formed is filtered, dried and weighed 1.10g.

A sheet of 0.5mm in thickness was prepared using 10.0g of the sample by a hot press and tested for the resistance to oxidation and solvent resistance in the same manner as in Example 1. The results show that the gel amount produced was 12% by weight and the appearance became delusted.

What is claimed is:

1. A graft copolymer consisting essentially of (i) a first phase substrate of a polyphenylene oxide and (ii) a second phase of superstrate which comprises at least one acrylonitrile compound and at least one styrene compound, and having substantially no unmodified polyphenylene oxide.

2. The graft copolymer of claim 1, wherein said acrylonitrile compound is a member selected from a group consisting of acrylonitrile, methacrylonitrile and a mixture thereof.

3. The graft copolymer of claim 1, wherein said styrene compound is a member selected from a group consisting of styrene, monochlorostyrene, dichlorostyrene, α-methylstyrene, p-methylstyrene, p-phenylstyrene, 2,4-dimethylstyrene.

4. The graft copolymer of claim 1, wherein the styrene content of the graft copolymer is from 5 to 195 parts by weight, based on 100 parts by weight of polyphenylene oxide.

5. The graft copolymer of claim 1, wherein the acrylonitrile content of the graft copolymer is from 5 to 195 parts by weight, based on 100 parts by weight of the polyphenyleneoxide.

6. The graft copolymer of claim 1, wherein said copolymer is produced by polymerization reaction of monomeric gas comprising said acrylonitrile compound and said styrene compound in the presence of solid polyphenylene oxide.

7. The graft copolymer of claim 1, wherein said superstrate comprises up to 80 % by weight of a vinyl monomer selected from a group consisting of acrylic acid, methacrylic acid, alkyl acrylate, alkylmethacrylate, and maleic acid anhydride.

8. The graft copolymer consisting essentially of (i) a substrate of a polyphenylene oxide and (ii) a superstrate which comprises at least one acrylonitrile compound and at least one styrene compound, wherein said copolymer does not form an observable precipitate after 48 hours of a methylenechloride test.

9. The graft copolymer of claim 8, wherein said copolymer does not form the precipitate after 72 hours of the methylene chloride test.

10. The graft copolymer of claim 8, wherein said precipitate is in an amount of not more than 5 % by weight of the copolymer.

11. The graft copolymer of claim 10, wherein said amount is not more than 1 % by weight of the copolymer.

European Patent Office

# EUROPEAN SEARCH REPORT

0059482

Application number

EP 82 10 1647

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| D,P X | EP-A-0 025 200 (KANEGAFUCHI KAGAKU KOGYO K.K.) *Claims 1,3,4; page 8, lines 18-25; page 9, lines 14-17; page 17* & JP - A - 56 034 716 | 1-8 | C 08 F 283/08 |
| X | FR-A-2 243 213 (ASAHI-DOW) *Claims 1,8; page 5, lines 19-34; page 7, line 25 - page 8, line 7* | 1-5 | |
| D,X | EP-A-0 017 939 (SUMITOMO) *Page 15, line 25 - page 16, line 18; examples* & JP - A - 55 137 130 | 1-5 | |
| A | DE-A-1 801 230 (GENERAL ELECTRIC) | | |

TECHNICAL FIELDS SEARCHED (Int. Cl. 3)

C 08 F

The present search report has been drawn up for all claims

| Place of search | Date of completion of the search | Examiner |
|---|---|---|
| THE HAGUE | 23-06-1982 | MEULEMANS R. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82